# EUROPEAN PATENT APPLICATION

(11) **EP 4 362 183 A1**
(43) Date of publication of application: **01.05.2024**
(21) Application number: 23163372.8
(22) Date of filing: 22.03.2023
(51) Int. Cl.: H01M 50/20

(54) **BATTERY MODULE**

(30) Priority: 30.08.2022 KR 20220109304
(71) Applicant: SK On Co., Ltd., Seoul 03161 (KR)
(72) Inventor: KIM, Ho Yeon, 34124 Daejeon (KR); AN, Sang Tae, 34124 Daejeon (KR); YOON, Hwa Kyoo, 34124 Daejeon (KR); LEE, Gang U, 34124 Daejeon (KR)
(74) Representative: Prüfer & Partner mbB Patentanwälte · Rechtsanwälte

(57) **Abstract**

A battery module includes a plurality of cell assemblies including a first cell assembly and a second cell assembly each including a plurality of battery cells; a connection member connected to the first cell assembly and the second cell assembly, respectively; a lower cover supporting the plurality of cell assemblies; and end cover spaced apart from the connection member, wherein the first cell assembly and the second cell assembly have at least one one side opposing the connection member and the other side opposing the end cover.

## Description

### BACKGROUND

### 1. FIELD

Example embodiments of the present disclosure relate to a battery module.

### 2. DESCRIPTION OF RELATED ART

A secondary battery may be charged and discharged differently from primary batteries, and has attracted attention as a power source of various mobile devices and electric vehicles. For example, a battery module may be formed by connecting a plurality of secondary batteries using a high energy density non-aqueous electrolyte, and the battery module may be used as a power source for an electric vehicle.

To configure a battery module having high capacity and a large area, the number of required battery cells may increase, and as the number of battery cells increases, the assembly of the battery module structure becomes complicated and the required assembly time may increase. Accordingly, simplifying the battery module structure is desirable for improving assembly efficiency and reducing the battery module weight.

Also, typically, in the case of a general battery module, a plurality of battery cells may be accommodated and assembled in a housing (case) having a predetermined size, but in the case in which the number of battery cells needs to be changed because the amount of power required for the battery module is different, the housing may need to be remanufactured accordingly, which may cause inefficiency in that manufacturing costs and required time may increase.

### SUMMARY

A battery module including multiple cell assemblies has been developed and applied as an eco-friendly power source for an electric automobile such as a hybrid vehicle. An example embodiment of the present disclosure is to provide a battery module having a simple structure and improved assembly.

An example embodiment of the present disclosure is to provide a battery module having high capacity by assembling a plurality of sub-modules.

An example embodiment of the present disclosure is to provide a battery module in which a plurality of sub-modules may be simply and stably assembled.

According to an example embodiment of the present disclosure, a battery module includes a plurality of cell assemblies including a first cell assembly and a second cell assembly each including a plurality of battery cells; a connection member connected to the first cell assembly and the second cell assembly, respectively; a lower cover supporting the plurality of cell assemblies; and an end cover spaced apart from the connection member, wherein the first cell assembly and the second cell assembly have at least one side facing the connection member and the other side facing the end cover.

Each of the first cell assembly and the second cell assembly may include a cell stack in which the plurality of battery cells are stacked in a first direction.

The first cell assembly and the second cell assembly may be disposed in a second direction perpendicular to the first direction with the connection member interposed therebetween.

At least one of the first cell assembly and the second cell assembly may include a busbar assembly including a busbar electrically connected to the cell stack; and one or more insulating covers coupled to the busbar assembly.

The one or more insulating covers may include a first insulating cover disposed between the connection member and the busbar assembly; and a second insulating cover disposed between the end cover and the busbar assembly.

The battery module may further include a side cover disposed to oppose at least one of the first cell assembly and the second cell assembly and coupled to the connection member.

The side cover may include a first coupling portion coupled to the connection member; and a second coupling portion coupled to the busbar assembly.

The busbar assembly may further include a busbar frame supporting the busbar, and the second coupling portion is coupled to the busbar frame.

The battery module may further include a plurality of fastening members penetrating through the side cover and fastened to the connection member or the busbar assembly.

Fastening holes into which the fastening member is inserted may be disposed on both ends of the connection member.

The lower cover may include an insertion groove into which at least a portion of the side cover is inserted.

The insertion groove may extend in a second direction perpendicular to the first direction, and the side cover may include a first protrusion sliding along the insertion groove.

The battery module may further include an upper cover covering upper portions of the plurality of cell assemblies, and the upper cover may include a bent portion bent in a direction toward the lower cover and coupled to the side cover.

The side cover may further include a second protrusion disposed between the bent portion and the cell stack.

The side cover may be welded to at least one of the upper cover or the lower cover.

According to an example embodiment of the present disclosure, a battery module includes a plurality of sub-modules each including a cell stack in which a plurality of battery cells are stacked; and a connection member disposed between two of the plurality of sub-modules, wherein at least one of the plurality of sub-modules includes a first surface on which an insulating cover formed of a non-conductive material is disposed; and a second surface on which an end cover including a metal material is disposed, and the first surface is connected to the connection member to face the connection member.

The plurality of battery cells may be stacked in a first direction, and the plurality of sub-modules may include a first sub-module and a second sub-module disposed in a second direction perpendicular to the first direction.

At least one of the plurality of sub-modules may include a side cover opposing the cell stack in the first direction, and the side cover may be coupled to the end cover and the connection member.

The battery module may further include an upper cover and a lower cover supporting the plurality of sub-modules.

The upper cover and the lower cover may be welded to the side cover.

According to an example embodiment of the present disclosure, a battery module includes a first cell assembly and a second cell assembly each including a plurality of battery cells; a connection member coupled to each one of the first and second cell assemblies at opposite sides thereof; and a supporting structure comprising upper, lower, side and end covers configured to support the plurality of cell assemblies.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective diagram illustrating a battery module according to an example embodiment of the present disclosure;
FIG. 2 is an exploded perspective diagram illustrating a battery module according to an example embodiment of the present disclosure;
FIG. 3 is an exploded perspective diagram illustrating a sub-module included in a battery module according to an example embodiment of the present disclosure;
FIG. 4 is a diagram illustrating coupling between sub-modules and a connection member according to an example embodiment of the present disclosure;
FIG. 5 is a diagram illustrating a side surface of a portion of a sub-module and a connection member according to an example embodiment of the present disclosure;
FIG. 6 is a diagram illustrating a portion of a cross-section taken along I-I' in FIG. 1;
FIG. 7 is an enlarged diagram illustrating a portion of a battery module, portion A in FIG. 1 according to an example embodiment of the present disclosure, viewed from above;
FIG. 8 is a diagram illustrating a configuration of a cell stack included in a battery module according to an example embodiment of the present disclosure;
FIG. 9 is a perspective diagram illustrating a battery cell included in a battery module according to an example embodiment of the present disclosure;
FIG. 10 is a diagram illustrating a bending portion of a battery cell according to an example embodiment of the present disclosure;
FIG. 11 is a diagram illustrating a state in which a battery cell is accommodated in a battery module according to an example embodiment of the present disclosure; and
FIG. 12 is a diagram illustrating a process of assembling a battery module according to an example embodiment of the present disclosure.

### DETAILED DESCRIPTION

The terms or words used in this description and in the following claims may not necessarily be construed to have meanings which are general or may be found in a dictionary. Rather, considering the notion that an inventor may most properly define the concepts of the terms or words to best explain his or her invention, the terms or words must be, when applicable, understood as having meanings or concepts that conform to the technical spirit of the present disclosure. Also, since the example embodiments set forth herein and the configurations illustrated in the drawings are nothing but a mere example and may not encompass all technical spirits of the present disclosure, it is to be understood that various equivalents and modifications may replace the example embodiments and configurations.

In the drawings, same elements will be indicated by same reference numerals. Also, overlapping descriptions and detailed descriptions of known functions and elements which may unnecessarily make the gist of the present disclosure obscure will not be provided. In the accompanying drawings, a portion of elements may be exaggerated, omitted or briefly illustrated, and the sizes of the elements do not necessarily reflect the actual sizes of these elements.

The terms, "include," "comprise," "is configured to," etc. of the description are used to indicate the presence of features, numbers, steps, operations, elements, portions or combination thereof, and do not exclude the possibilities of combination or addition of one or more features, numbers, steps, operations, elements, portions or combination thereof.

In example embodiments, terms such as an upper side, an upper portion, a lower side, a lower portion, a side surface, a front surface, a rear surface, or the like, are represented based on the directions in the drawings, and may be used differently if the direction of an element is changed.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of the disclosure in the example embodiments.

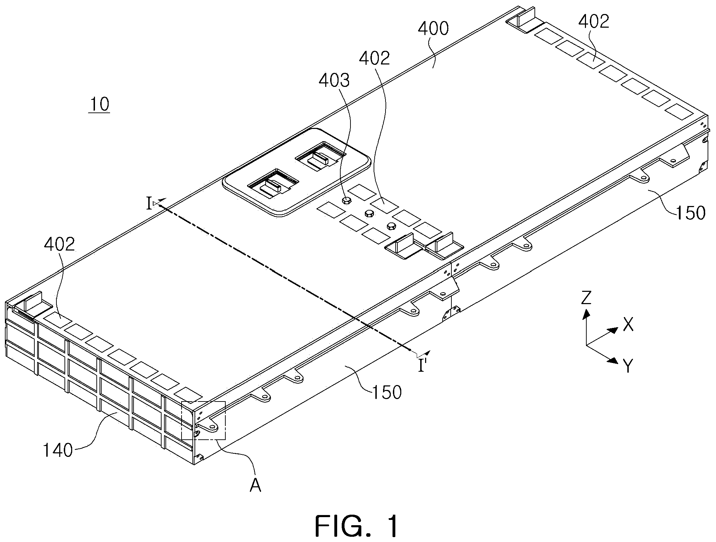

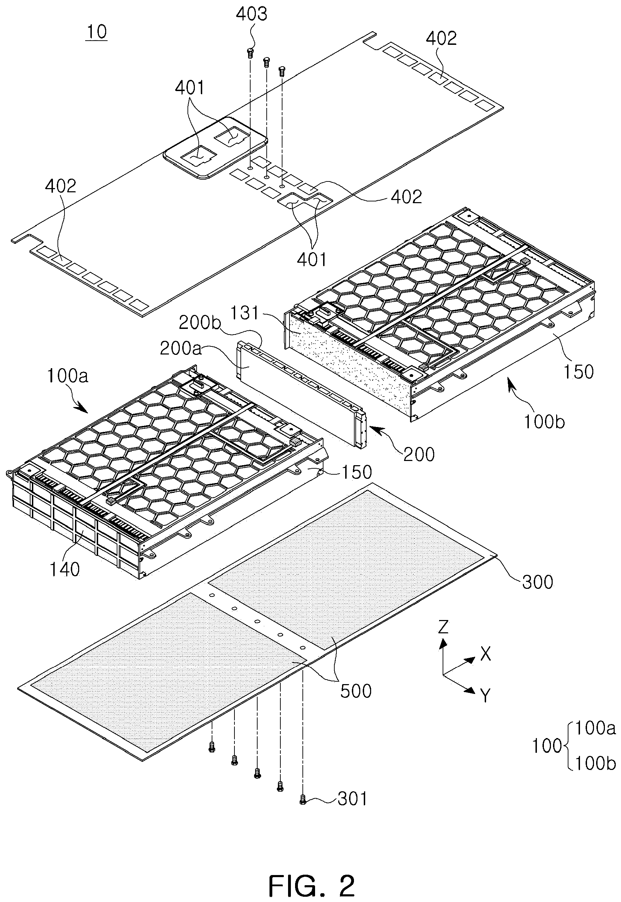

Hereinafter, the battery module 10 according to example embodiments will be described with reference to FIGS. 1 and 2.

FIG. 1 is a perspective diagram illustrating a battery module 10 according to an example embodiment. FIG. 2 is an exploded perspective diagram illustrating a battery module 10 according to an example embodiment.

The battery module 10 may include a plurality of sub-modules 100, a connection member 200 connecting the sub-modules 100 to each other, a lower cover 300 and an upper cover 400 supporting the sub-modules 100.

The battery module 10 may include a plurality of sub-modules 100. For example, referring to FIG. 2, the battery module 10 may include a first sub-module 100a and a second sub-module 100b arranged in one direction (e.g., the X-axis direction) . The first sub-module 100a and the second sub-module 100b may be assembled together and may form at least a portion of the battery module 10.

One or more connection members 200 may be disposed between two of the plurality of sub-modules 100. For example, as illustrated in FIG. 2, a connection member 200 may be disposed between the first sub-module 100a and the second sub-module 100b disposed side by side in the X-axis direction.

The first sub-module 100a and the second sub-module 100b may be coupled to the connection member 200, respectively. For example, the first sub-module 100a may be fastened to at least one portion of the connection member 200, and the second sub-module 100b may be fastened to another portion of the connection member 200. More specifically, the first sub-module 100a may be fastened to a first side 200a of the connection member 200, and the second sub-module 100b may be fastened to a second side 200b of the connection member 200. The first and second sides 200a and 200b of the connection member 200 are opposite to each other in the X-direction. The first sub-module 100a and the second sub-module 100b may be coupled to each other via the connection member 200. In an embodiment, the first sub-module 100a and the second sub-module 100b may be fixed to each other via the connection member 200.

In the battery module 10 the connection member 200 may work as a reference point for assembling the sub-modules 100. That is, the connection member 200 may partition a space in the battery module 10 in which each sub-module 100 is accommodated, and may guide the positioning of each sub-module 100 in its position inside the module accommodation space.

The connection member 200 may be made of a material having a predetermined degree of rigidity to stably support the plurality of sub-modules 100. For example, suitable materials for the connection member 200 may include a metal material such as, for example, aluminum or stainless steel.

The battery module 10 may include the lower cover 300 and the upper cover 400 for supporting the plurality of sub-modules 100. For example, referring to FIG. 2, the integrally formed lower cover 300 may be disposed to cover the lower surfaces of the plurality of sub-modules 100, and the integrally formed upper cover 400 may be disposed to cover the upper surfaces of the plurality of sub-modules 100. As the lower cover 300 and the upper cover 400 are integrally formed as described above, the plurality of sub-modules 100 may be stably supported.

A heat dissipation member 500 may be disposed between the lower cover 300 and the plurality of sub-modules 100. One surface of the heat dissipation member 500 may be disposed to be in contact with the sub-module 100 and the other surface opposite to the one surface may be in contact with the lower cover 300. The heat dissipation member 500 may be provided with a thermal adhesive. The heat dissipation member 500 may fill a space between the sub-module 100 and the lower cover 300 such that heat transfer by conduction may be actively performed. Accordingly, heat dissipation efficiency of the battery module 10 may be increased.

The battery module 10 may include the upper cover 400 covering an upper portion of the sub-module 100. The upper cover 400 may be integrally formed to simultaneously support the plurality of sub-modules 100.

The upper cover 400 may have an opening 401 through which a terminal portion of the sub-module 100 or a portion of the sensing module of the sub-module 100 may be exposed.

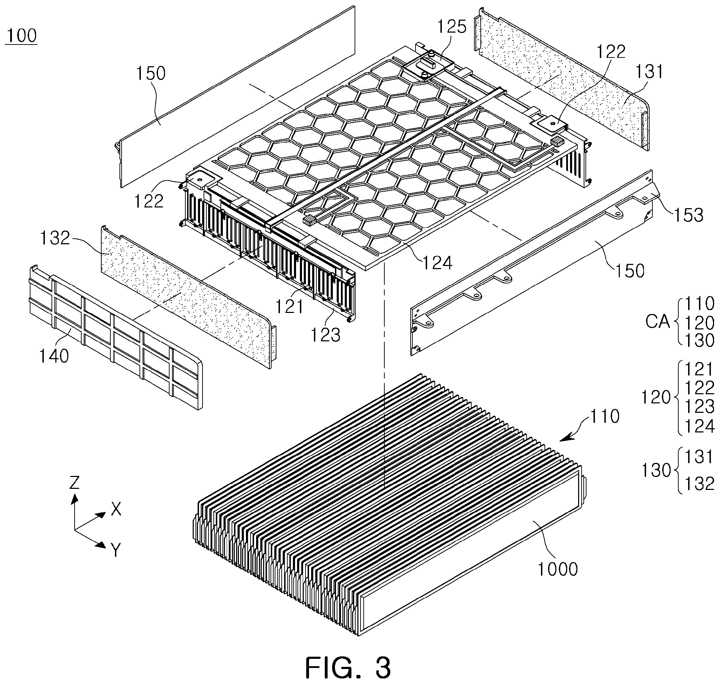

The upper cover 400 may include one or more venting holes 402 through which gas generated in thermal runaway of the sub-module 100 may be safely discharged. A plurality of venting holes 402 may be arranged side by side in the direction in which the plurality of battery cells (e.g., 1000 in FIG. 3) included in the sub-module 100 are arranged (e.g., the Y-axis direction in FIG. 2).

The connection member 200 may be combined with at least one of the lower cover 300 and the upper cover 400. For example, referring to FIG. 2, the battery 10 module may include a lower fastening member 301 and an upper fastening member 403 which may be coupled to the connection member 200, for example, by bolts. The lower fastening member 301 may penetrate through the lower cover 300 and may be inserted into the connection member 200, and accordingly, the connection member 200 and the lower cover 300 may be fixed to each other. Alternatively, the upper fastening member 403 may penetrate through the upper cover 400 and may be inserted into the connection member 200, and accordingly, the connection member 200 and the upper cover 400 may be fixed to each other. However, the fastening method of the connection member 200, the lower cover 300, and the upper cover 400 is not limited to the above example, and the arrangement of the lower fastening member 301 and the upper fastening member 403 may also be different from the examples in the drawings and may be disposed in various positions. For example, the connecting member 200 and the lower cover 300 or the connecting member 200 and the upper cover 400 may have a male-female structure that engages each other, and may be fitted into each other.

Each sub-module 100 may include a plurality of battery cells and may be configured to store or discharge electrical energy.

In the battery module 10, a plurality of sub-modules 100 may be electrically connected to each other to output a design power value required for the battery module . For example, the two sub-modules 100 opposing each other with the connection member 200 interposed therebetween may be connected in series or in parallel through terminal portions.

Alternatively, in one battery module 10, the plurality of sub-modules 100 may be electrically isolated from each other. For example, two sub-modules 100 opposing each other with a connection member 200 interposed therebetween may be electrically separated from each other, and a terminal portion of each sub-module 100 may be electrically connected to another adjacent battery module 10.

Hereinafter, the sub-module 100 will be described in detail with reference to FIG. 3.

FIG. 3 is an exploded perspective diagram illustrating a sub-module 100 included in a battery module 10 according to an example embodiment. The sub-module 100 described with reference to FIG. 3 may correspond to the first sub-module 100a or the second sub-module 100b previously described with reference to FIGS. 1 and 2, and thus, overlapping descriptions will not be provided.

The battery module 10 may include a plurality of sub-modules 100. At least one of the plurality of sub-modules 100 included in the battery module 10 may include a cell assembly CA and a plurality of protective covers 140 and 150 protecting the cell assembly CA. Here, the protective covers 140 and 150 may include an end cover 140 covering at least one side of the cell assembly CA and one or more side covers 150.

The cell assembly CA may include a cell stack 110 including battery cells 1000 stacked in one direction (e.g., the Y-axis direction), a busbar assembly 120 electrically connected to the cell stack 110, and an insulating cover 130 coupled to the busbar assembly 120.

The cell stack 110 may include a plurality of battery cells 1000 electrically connected to each other. In the cell stack 110, the plurality of battery cells 1000 may be stacked in one direction (Y-axis direction) . In the description below, the stacking direction of the battery cells 1000 included in the cell stack 110 may be referred to as a "first direction" or a "cell stacking direction."

The busbar assembly 120 may include a plurality of busbars 121 electrically connecting the battery cells 1000 of the cell stack 110 to each other and a support frame supporting the busbars 121.

The busbar 121 may be formed of a conductive material and may work to electrically connect the plurality of battery cells 1000 to each other. The busbar 121 may be electrically connected to the battery cell 1000 while being fixed to the support frame. A terminal portion 122 electrically connected to an external circuit of the sub-module 100 may be disposed on at least a portion of the busbars 121.

The support frame may support the busbar 121 to be stably connected to the battery cell 1000. The support frame may include a non-conductive material (e.g., plastic) having a predetermined level of rigidity and may structurally support the plurality of busbars 121.

The support frame may oppose at least one side of the cell stack 110. For example, referring to FIG. 3, the support frame may include a busbar frame 123 opposing the cell stack 110 in a second direction (X-axis direction) and supporting the busbar 121, and a connection frame 124 opposing the cell stack 110 in the third direction (Z-axis direction) and connected to the busbar frame 123. Here, the second direction may be a direction perpendicular to the first direction, and the third direction may be a direction perpendicular to both the first and second directions.

A sensing module 125 for sensing electrical and thermal states of the battery cells 1000 included in the cell stack 110 may be disposed on the connection frame 124. Voltage information or temperature information sensed by the sensing module 125 may be transmitted to the outside of the sub-module 100 and may be used to control the battery module 10.

The cell assembly CA may include the insulating cover 130 covering at least one surface of the busbar assembly 120. The insulating cover 130 may include a non-conductive material and may prevent the busbar 121 of the busbar assembly 120 from being unintentionally shorted with other components.

An end cover 140 may be disposed on the outermost side of one side of the sub-module 100. The end cover 140 may include a rigid material (e.g., a metal material such as aluminum) and may protect the cell assembly CA from external impact. In a state in which the sub-module 100 is coupled to the connection member (e.g., 200 in FIG. 2) and the lower cover (e.g., 300 in FIG. 2), the end cover 140 may be spaced apart from the connection member 200 and may be disposed on an edge of one side of the lower cover 300.

In example embodiments, a plurality of insulating covers 130 of the cell assembly CA may be provided. For example, the sub-module 100 may include a first insulating cover 131 electrically separating the connecting member 200 from the bus bar assembly 120 and a second insulating cover 132 electrically separating the end cover 140 from the bus bar assembly 120.

The first insulating cover 131 may be disposed between the connection member 200 and the busbar 121 and may electrically separate the components from each other. Similarly, the second insulating cover 132 may be disposed between the end cover 140 and the busbar 121 and may electrically separate the components from each other.

The insulating cover 130 may be coupled to the busbar assembly 120. For example, each of the first insulating cover 131 and the second insulating cover 132 may be inserted into and fixed to the busbar frame 123. Alternatively, the insulating cover 130 may be fixed to the busbar frame 123 through a fastening member.

The sub-module 100 may include a side cover 150 opposing at least one side of the cell stack 110.

A pair of the side covers 150 may be provided to cover different surfaces of the cell stack 110. The pair of side covers 150 may be coupled to the end cover 140 and the connection member 200, may form a side surface of the sub-module 100, and may protect the cell stack 110 from an external environment.

The side cover 150 may oppose the cell stack 110 in a different direction from the end cover 140. For example, as illustrated in FIG. 3, the side cover 150 may be disposed to oppose the cell stack 110 in a first direction (Y-axis direction) , and the end cover 140 may be disposed to oppose the cell stack 110 in the second direction (X-axis direction) with the bus bar assembly 120 and the second insulating cover 132 interposed therebetween. Accordingly, the end cover 140, the pair of side covers 150, and the first insulating cover 131 may form four surfaces of the sub-module 100.

In one side cover 150, the end cover 140 may be coupled to a first end, and the connection member 200 of the battery module 10 may be coupled to a second end opposite to the first end. To increase coupling strength, the busbar assembly 120 may also be coupled with the side cover 150.

The side cover 150 may further include a connection portion 153 which may be structurally connected to an external component of the battery module 10. For example, referring to FIG. 3, the connection portion 153 may have a structure protruding from the surface of the side cover 150 in a first direction (Y-axis direction). The battery module 10 may be coupled to an external component (e.g., a battery pack housing in which the plurality of battery modules 10 are accommodated) through the connection portion 153 of the side cover 150.

The lower surface of the sub-module 100 may be configured such that the cell stack 110 may be exposed. For example, the sub-module 100 may not have a separate cover member on a lower surface thereof, and accordingly, the cell stack 110 may be in direct contact with an external component (e.g., the lower cover 300 or the heat dissipation member 500 of the battery module 10 illustrated in FIG. 2) of the sub module 100. Accordingly, heat may be smoothly discharged from the cell stack 110 toward the lower portion of the sub-module 100, such that heat dissipation efficiency of the sub-module 100 may be increased.

In the sub-module 100, an end cover 140 may be disposed in an outermost portion of one side and a first insulating cover 131 may be disposed in an outermost portion of the other side. That is, one of the sub-modules 100 may include a first surface on which the insulating cover 131 is disposed and a second surface on which the end cover 140 is disposed. For example, referring to FIG. 3, the first surface of one sub-module 100 may be closed with an insulating cover 131, and the second surface opposite to the first surface may be closed with an end cover 140.

The two sub-modules 100 disposed to oppose each other with the connection member 200 interposed therebetween may be disposed such that the first surfaces thereof may oppose the connection member 200. For example, the first sub-module 100a may be coupled to the connection member 200 such that the first surface on which the insulating cover 130 is disposed may oppose the connection member 200, and the second sub-module 100b may be coupled to the connection member 200 such that the first surface on which the insulating cover 130 is disposed may oppose the connection member 200. By this connection structure, in the battery module 10 in which the first sub-module 100a and the second sub-module 100b are connected to each other, the end covers 140 of each sub-module 100 may form the front and rear outer surfaces of the battery module 10, and the side covers 150 combined with the end cover 140 may form the side outer surfaces.

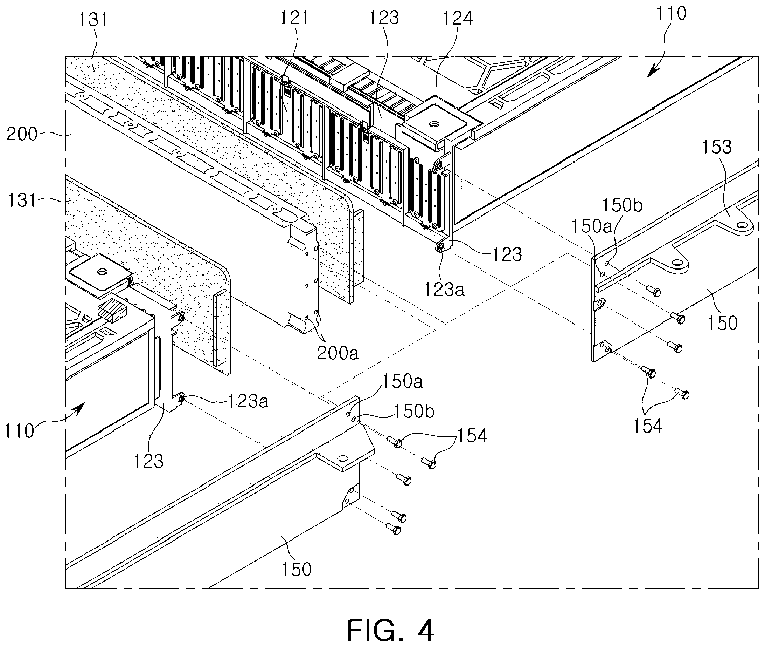

Hereinafter, with reference to FIGS. 4 to 6, a structure in which the sub-module 100 is combined with other components of the battery module 10 will be described in detail.

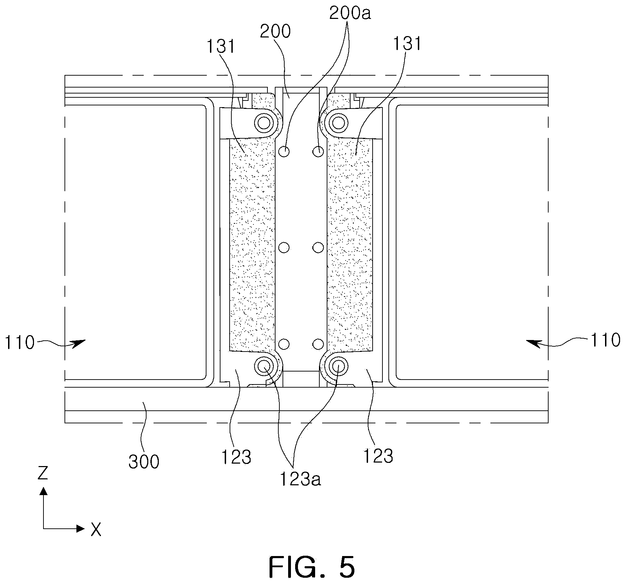

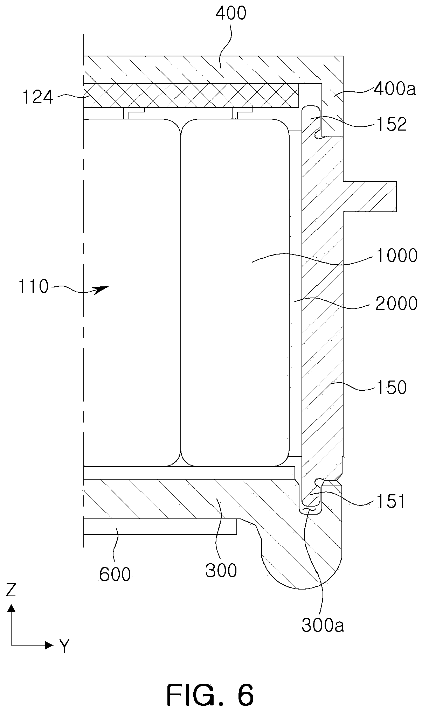

FIG. 4 is a diagram illustrating coupling between a side cover 150 of the sub module 100 and a connection member 200 according to an example embodiment. FIG. 5 is a diagram illustrating a portion of a side surface of a sub-module 100 and a connection member 200 according to an example embodiment. FIG. 6 is a diagram illustrating a portion of a cross-section taken along I-I' in FIG. 1.

The sub-module 100 described with reference to FIGS. 4 to 6 and the battery module 10 including the sub-module 100 may correspond to the sub-module 100 described with reference to FIGS. 1 to 3 and the battery module 10 including the same, and thus, overlapping descriptions will not be provided.

The sub-module 100 may be connected to the connection member 200 through a combination of the side cover 150 and the connection member 200.

The side cover 150 may include a first coupling portion 150a coupled to the connection member 200 and a second coupling portion 150b coupled to the busbar assembly 120. As the side cover 150 is coupled to the connection member 200, the sub-module 100 may be connected to the connection member 200.

For example, referring to FIG. 4, the first coupling portion 150a may be provided in the shape of a hole penetrating the side cover 150. Corresponding to the first coupling portion 150a, the connection member 200 may also have a fastening hole 200a. Accordingly, the fastening member 154 may be inserted into the first coupling portion 150a of the side cover 150 and the fastening hole 200a of the connection member 200, and may fix the side cover 150 and the connection member 200. For example, the fastening member 154 may be a bolt and may be bolted to the first coupling portion 150a or the fastening hole 200a. To this end, the fastening member 154 may have a male screw shape, and the first coupling portion 150a or the fastening hole 200a may have a female screw shape corresponding to a thread of the fastening member.

For coupling with the connection member 200, the first coupling portion 150a of the side cover 150 may be disposed to further protrude in the second direction (X-axis direction) than the busbar assembly 120.

In the side cover 150, a plurality of first coupling portions 150a may be provided. Correspondingly, a plurality of fastening holes 200a of the connection member 200 may be provided. In this case, the plurality of fastening holes 200a may be spaced apart from each other in the third direction (Z-axis direction).

However, the fastening structure of the side cover 150 and the connection member 200 is not limited to the example described above. For example, the side cover 150 and the connection member 200 may be fixed to each other through an adhesive member or by welding connection.

The side cover 150 may further include one or more second coupling portions 150b coupled to the busbar assembly 120. For example, referring to FIG. 4, the side cover 150 may include a second coupling portion 150b coupled to the busbar frame 123 of the busbar assembly 120.

Similarly, to the first coupling portion 150a, the second coupling portion 150b may have a hole shape and may penetrate the side cover 150. Corresponding to the position of the second coupling portion 150b, the busbar frame 123 may also have a fastening hole 123a. Accordingly, the fastening member 154 may be inserted into the second coupling portion 150b of the side cover 150 and the fastening hole 123a of the busbar frame 123 and may fasten the side cover 150 and the busbar frame 123.

When the first sub-module 100a and the second sub-module 100b are coupled to the connection member 200, the side cover 150 of the first sub-module 100a and the side cover 150 of the second sub-module 100b may be in contact with each other. Accordingly, the side cover 150 of the first sub-module 100a and the side cover 150 of the second sub-module 100b may form the side surface of the battery module 10.

Referring to FIG. 6, the side cover 150 of the sub-module 100 may be combined with the lower cover 300 and the upper cover 400.

The lower cover 300 may include an insertion groove 300a into which at least a portion of the side cover 150 is inserted.

The side cover 150 may include a first protrusion 151 which may be inserted into the insertion groove 300a of the lower cover 300.

The insertion groove 300a may guide the coupling position of the sub-module 100. The insertion groove 300a may extend in the second direction (X-axis direction) . During the assembly process of the battery module 10, the sub-module 100 or the side cover 150 of the sub-module 100 may slide and may be coupled along the insertion groove 300a of the lower cover 300.

In a state in which the first protrusion 151 of the side cover 150 is inserted into the insertion groove 300a of the lower cover 300, the side cover 150 and the lower cover 300 may be welded together. For example, referring to FIG. 6, the contact portion between the side cover 150 and the lower cover 300 may be welded and coupled.

The upper cover 400 may include a bent portion 400a formed by bending an edge taken in the first direction (Y-axis direction) in a direction toward the lower cover 300. The bent portion 400a of the upper cover 400 may be coupled to the side cover 150. For example, referring to FIG. 6, a portion in which the bent portion 400a of the upper cover 400 and the side cover 150 are in contact with each other may be welded.

The side cover 150 may include a second protrusion 152 disposed in the bent portion 400a of the upper cover 400 while being coupled with the upper cover 400. For example, referring to FIG. 6, the side cover 150 may include a second protrusion 152 disposed between the bent portion and the cell stack 110.

The side cover 150 may be configured to withstand internal pressure generated in the sub-module 100 or external pressure received from the outside of the sub-module 100. For example, the side cover 150 may be configured to withstand the expansion pressure of the battery cells 1000 included in the cell stack 110.

Even when expansion pressure is applied to the side cover 150 due to the swelling of the cell stack 110, since the side cover 150 is coupled to the lower cover 300 or the upper cover 400, the cell stack 110 may be stably supported from both sides.

Also, as the first protrusion 151 of the side cover 150 is inserted into the insertion groove 300a of the lower cover 300, and the second protrusion 152 is disposed in the bent portion 400a of the upper cover 400, the side cover 150 may withstand the expansion pressure of the cell stack 110 more effectively. That is, since the first protrusion 151 and the second protrusion 152 may be engaged with the insertion groove 300a and the bent portion 400a and may be supported so as not to be pushed out of the sub-module 100, even when strong expansion pressure is applied to the side cover 150, a stable structure may be maintained. Accordingly, the side cover 150 may, by preventing expansion of the cell stack 110 due to swelling, contribute to improving electrical performance of the sub-module 100.

To more swiftly and effectively cool the cell stack 110, a heat sink 600 may be disposed on the lower cover 300. The heat sink 600 may have a cooling flow path through which a cooling liquid flows. The heat sink 600 may be attached to one surface of the lower cover 300 or may be integrally formed with the lower cover 300.

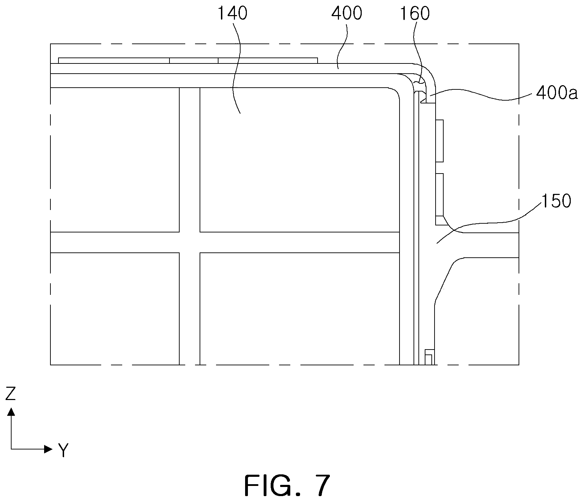

Hereinafter, the venting hole 160 of the battery module 10 will be described with reference to FIG. 7.

FIG. 7 is an enlarged diagram illustrating a portion of a battery module, portion A in FIG. 1 according to an example embodiment, viewed from above. Since the battery module 10 described with reference to FIG. 7 corresponds to the battery module 10 in FIGS. 1 to 6, overlapping descriptions will not be provided.

The battery module 10 may include a venting hole 160 through which at least a portion of gas generated from the cell stack 110 is discharged. For example, referring to FIG. 7, a venting hole 160 may be formed between the end cover 140, the side cover 150, and the upper cover 400 as a spacing through which gas may flow.

The venting hole 160 may be communicated with the internal space of the battery module 10, and accordingly, gas generated while the cell stack 110 is charged and discharged may be discharged to the outside of the battery module 10 through the venting hole 160.

The venting hole 160 may be formed between the end cover 140, the side cover 150 and the lower cover 300. However, the position of the venting hole 160 is not limited to the above example.

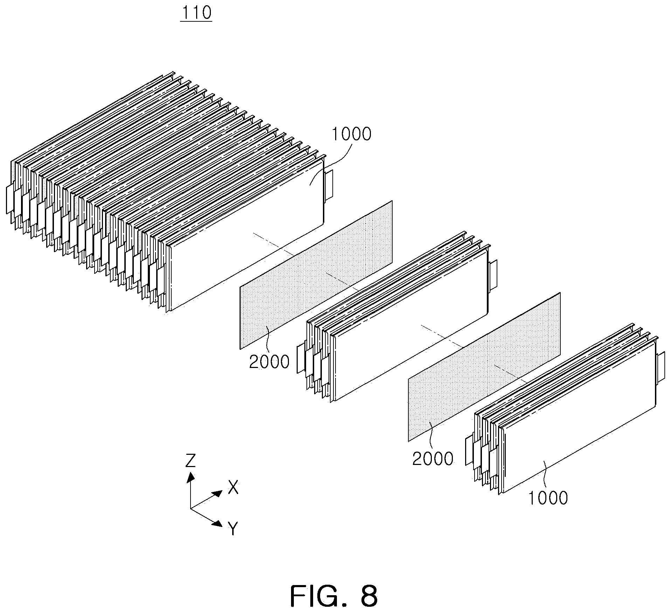

Hereinafter, the cell stack 110 included in the battery module 10 will be described in detail with reference to FIGS. 8 to 11.

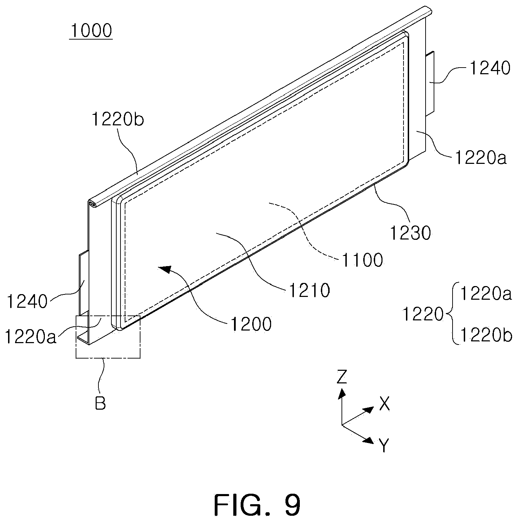

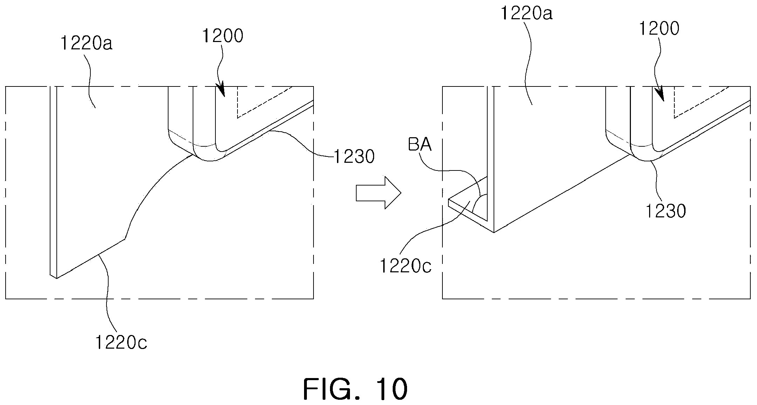

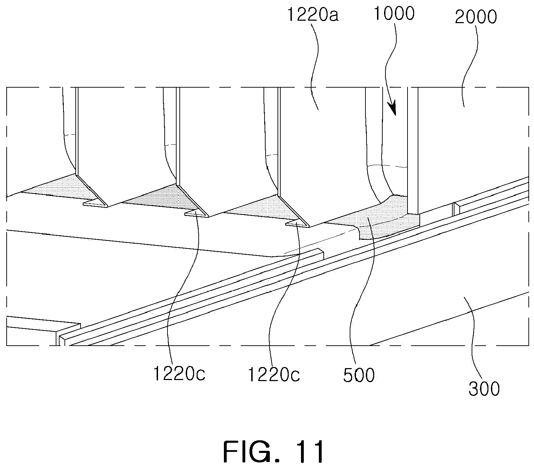

FIG. 8 is a diagram illustrating a configuration of a cell stack 110 included in a battery module 10 according to an example embodiment. FIG. 9 is a perspective diagram illustrating a battery cell 1000 included in a battery module 10 according to an example embodiment. FIG. 10 is a diagram illustrating a bending portion of a battery cell 1000 according to an example embodiment. FIG. 11 is a diagram illustrating a state in which a battery cell 1000 is accommodated in a battery module 10 according to an example embodiment.

The battery cell 1000, the cell stack 110, and the battery module 10 described with reference to FIGS. 8 to 11 may respectively correspond to the battery cell 1000, the cell stack 110 and the battery module 10 described with reference to FIGS. 1 to 7, and thus, overlapping descriptions will not be provided.

In example embodiments, the cell stack 110 may include one or more battery cells 1000. The battery cell 1000 may be configured to convert chemical energy into electrical energy and to supply power to an external circuit, or to receive power supplied from an external entity and to convert electrical energy into chemical energy and may store electricity. For example, the battery cell 1000 may include a nickel metal hydride (Ni-MH) battery or a lithium ion (Li-ion) battery for charging and discharging. In example embodiments, a plurality of battery cells 1000 may be stacked side by side, may be connected in series or in parallel and may form the cell stack 110.

In example embodiments, the cell stack 110 may further include various types of protective members 2000 for protecting the battery cells 1000 in addition to the battery cells 1000. For example, as illustrated in FIG. 8, the cell stack 110 may be formed by stacking a plurality of battery cells 1000 and a plurality of protective members 2000.

The protective member 2000 may include a compression pad or a heat insulating sheet, or a combination of a compression pad and a heat insulating sheet.

The compression pad may protect the battery cell 1000 from external impact or may absorb expansion pressure caused by expansion of the battery cell 1000. For example, the compression pad may include a polyurethane-based material and may absorb the expansion pressure of the battery cell 1000.

The insulating sheet may be disposed to oppose at least one of the battery cell 1000 or the compression pad. The heat insulating sheet may block spreading of flame or high-temperature thermal energy between neighboring battery cells 1000, thereby preventing chain ignition in the cell stack 110. For example, the insulating sheet may include at least a portion of materials of mica, silicate, graphite, alumina, ceramic wool, and Aerogel which may perform a function of preventing spreading of heat and/or flame.

A plurality of protective members 2000 may be disposed in the cell stack 110, and may be disposed between adjacent battery cells 1000 or may be disposed on an edge of the cell stack 110. However, the position of the protective member 2000 is not limited to the above example, and may be properly disposed in or outside the sub-module 100 if desired.

Meanwhile, the cell stack 110 illustrated in FIG. 8 may be merely an example, and the cell stack 110 may further include various types of protective members 2000 other than the above-described compression pad or heat insulating sheet.

In example embodiments, the plurality of battery cells 1000 included in the cell stack 110 may be pouch-type battery cells 1000 as illustrated in FIG. 9.

Referring to FIG. 9, the pouch-type battery cell 1000 may include a cell body portion 1210 in which the electrode assembly 1100 is accommodated in the pouch 1200, and a plurality of lead tabs 1240 electrically connected to the electrode assembly 1100 and exposed to the outside of the pouch 1200. The electrode assembly 1100 may be configured in a form in which a positive electrode plate and a negative electrode plate are stacked with a separator interposed therebetween. In the battery cell 1000 illustrated in FIG. 9, the two lead tabs 1240 may be disposed to oppose each other in opposite directions, or may be disposed in the same direction and may have different lengths or heights.

The pouch 1200 may surround the electrode assembly 1100, may form the exterior of the cell body 1210, and may provide an internal space in which the electrode assembly 1100 and an electrolyte solution are accommodated. The pouch 1200 may accommodate the electrode assembly 1100 therein and may have an internal space corresponding to the shape of the electrode assembly 1100.

In example embodiments, the pouch 1200 may be formed by folding a sheet of exterior material. For example, the pouch 1200 may be formed by folding a sheet of exterior material in half and having an internal space in which the electrode assembly 1100 is accommodated. The exterior material may be an aluminum laminated film.

A sealing portion 1220 may be formed on an edge of the pouch 1200 by bonding the exterior material thereto. A thermal fusion method may be used to bond the exterior material for forming the sealing portion 1220, but an example embodiment thereof is not limited thereto.

The sealing portion 1220 may include a first sealing portion 1220a formed in a position in which the lead tab 1240 is disposed and a second sealing portion 1220b formed in a position in which the lead tab 1240 is not disposed. To increase bonding reliability of the sealing portion 1220 and reduce the area of the sealing portion 1220, a portion of the second sealing portion 1220b may be processed to have a folded at least once.

The sealing portion 1220 may not be formed on a surface on which the exterior material is folded along one side edge of the electrode assembly 1100. A portion in which the pouch 1200 is folded along one side edge of the electrode assembly 1100 may be defined as a folding portion 1230 to distinguish the portion from the sealing portion 1220. That is, the pouch-type battery cell 1000 may have a three-sided sealing pouch form in which the sealing portions 1220 may be formed on three of four edge surfaces of the pouch 1200, and the folding part 1230 may be formed on the other surface.

However, the battery cell 1000 is not limited to the shape of the three-sided sealing pouch 1200 illustrated in FIG. 9. For example, a pouch may be formed by overlapping two sheets of different exterior materials, and the sealing portion may be formed on all four sides on a circumference of the pouch.

In the above description, the example in which the pouch-type battery cell 1000 is used as the battery cell 1000 has been described, but the battery cell 1000 is not limited to the aforementioned pouch-type, and may be configured in a can-type battery cell. For example, the can-type battery cells may have a rectangular plane so as to be stacked and to form the cell stack 110. In a can-type battery cell having a rectangular plane, each electrode may be disposed on a side surface of the battery cell and may be connected to the busbar assembly 120.

In the pouch-type battery cell 1000, due to the thickness of the electrode assembly 1100 and the cell body portion 1210 accommodating the same, at least a portion of the sealing portion 1220 may protrude further than the other portion of the battery cell 1000. For example, as illustrated in the left enlarged diagram in FIG. 10, the exterior material of the portion extending from the first sealing portion 1220a to the folding portion 1230 may protrude in a downward direction (e. g. , in the negative Z-axis direction) than the folding portion 1230 while going through a sealing process.

The portion protruding downwardly of the folding portion 1230 may be referred to as a shark-fin, delta-fin, or bat-ear, and by the portion, the battery cell 1000 may be formed to be unnecessarily large, which may be disadvantageous in terms of energy density or cooling efficiency of the battery module 10. Also, due to such a shark pin, an unnecessary dead space may be formed between the battery cell 1000 and the lower cover 300.

To reduce the dead space, in the battery cell 1000 according to the example embodiments, a bending portion 1220c in which a protruding portion of an exterior material is bent may be formed.

For example, as illustrated in the right enlarged diagram in FIG. 10, the battery cell 1000 may include a bending portion 1220c formed by bending a portion of the sealing portion 1220 protruding downwardly of the folding portion 1230. As the bending portion 1220c is formed, a portion of the battery cell 1000 protruding downwardly of the folding portion 1230 may be eliminated or reduced.

The bending portion 1220c may be formed in various manners. For example, the bending portion 1220c may be formed by bending at least a portion of the sealing portion 1220a along a bending line formed parallel to the folding portion 1230. Alternatively, the bending portion 1220c may be formed by rolling up at least a portion of the sealing portion 1220a in a clockwise or counterclockwise direction.

An angle BA between the bending portion 1220c and the cell body portion 1210 may be formed in various manners. For example, an enlarged diagram on the right side in FIG. 10 illustrates a state in which the bending portion 1220c is bent perpendicular to the cell body portion 1210. However, the shape illustrated in the drawings is merely an example. For example, the angle BA between the bending portion 1220c and the cell body portion 1210 may be smaller than 90 degrees. Alternatively, the bending portion 1220c may be bent by 180 degrees to contact the sealing portion 1220a.

Since the battery cell 1000 included in the cell stack 110 has a bending portion 1220c, the folding portion 1230 of each battery cell 1000 may be in close contact with a lower cover 300 of the battery module 10.

For example, referring to FIG. 11, the battery cell 1000 may be seated on the lower cover 300 such that the bent portion 1220c may oppose the lower cover 300, and accordingly, the battery cell 1000 may be in close contact with the lower cover 300. Accordingly, a gap (a dead space) between the battery cell 1000 and the lower cover 300 may be reduced and energy density in the limited internal space of the battery module 10 may be increased.

Also, a folding portion (e.g., 1230 in FIG. 9) surrounding the electrode assembly (e.g., 1100 in FIG. 9) may be disposed more adjacent to the lower cover 300 or a heat sink disposed on the lower cover 300 (e.g., 600 in FIG. 6), such that heat may be smoothly discharged from the battery cell 1000 toward the battery module 10 and cooling efficiency may be increased.

In a general battery module, an escape space may be provided in the lower cover to reduce interference with the protruding portion (shark pin) of the battery cell, but in the battery module 10 according to the example embodiments, an escape space may not be provided or may be configured with a minimum size, rigidity of the lower cover 300 may be further increased.

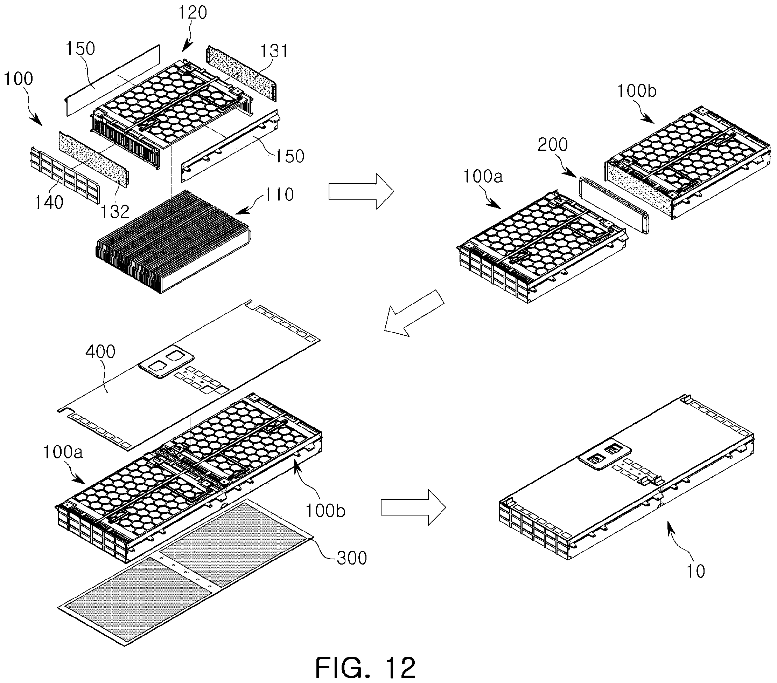

Hereinafter, a process of assembling the battery module 10 according to embodiments will be described with reference to FIG. 12.

FIG. 12 is a diagram illustrating a process of assembling a battery module 10 according to an example embodiment. The sub-module 100 and the battery module 10 described with reference to FIG. 12 may correspond to the sub-module 100 and the battery module 10 described with reference to FIGS. 1 to 11, and thus, overlapping descriptions may not be provided.

A method of manufacturing a battery module may include a sub-module manufacturing step of manufacturing a plurality of sub-modules 100, a connecting step of connecting the manufactured sub-modules 100 to each other via a connection member 200, and a covering step of closing the upper and lower portions of the connected sub-modules by covering the portions with a case (e.g., an upper cover and a lower cover).

A sub-module may be a sub-unit included in at least a portion of a battery module, and a battery module may be manufactured by assembling a plurality of sub-modules. The upper left end of diagram in FIG. 12 illustrates an example of assembling of a sub-module 100. The sub-module 100 may be assembled by combining the end cover 140 and the side cover 150 with the cell assembly CA in which the cell stack 110, the busbar assembly 120, and the insulating cover 130 are combined. If desired, an additional component for insulation or gas venting may be added during the process of assembling the sub-module 100.

The plurality of sub-modules 100 manufactured as above may be assembled to each other via the connection member 200. The upper right end of diagram in FIG. 12 illustrates an example of connecting a plurality of manufactured sub-modules 100a and 100b to each other. The first sub-module 100a and the second sub-module 100b may be coupled to the connection member 200 and may be assembled with each other. In this case, a specific coupling structure between each of the sub-modules 100a and 100b and the connection member 200 may be similar to the fastening structure described with reference to FIG. 4 above.

In the first sub-module 100a and the second sub-module 100b, the arrangement direction of the terminal portion (e.g., 122 in FIG. 3) or the specific positions in which the sensing module (e.g., 125 in FIG. 3) is disposed may be different.

The plurality of sub-modules 100 connected to each other by the connection member 200 may be combined with the upper cover 400 and the lower cover 300 covering upper and lower portions. The bottom left end of diagram in FIG. 12 illustrates an example of combining the plurality of sub-modules 100a and 100b with the lower cover 300 and the upper cover 400.

The plurality of sub-modules 100a and 100b may be seated on the lower cover 300 which may integrally support the components. To increase heat dissipation efficiency, a heat dissipation member (e.g., 500 in FIG. 2) may be applied to the upper surface of the lower cover 300. Similarly, to the lower cover 300, the upper cover 400 may be integrally formed and may cover and protect the upper sides of the plurality of sub-modules 100a and 100b. The plurality of sub-modules 100a and 100b, the lower cover 300 and the upper cover 400 may be welded together. Also, the connection member 200 disposed between the plurality of sub-modules 100a and 100b may be fastened to the lower cover 300 and the upper cover 400. In this case, a bolting coupling method using a fastening member (not illustrated) may be applied.

In coupling the plurality of sub-modules 100a and 100b with the upper cover 400 and the lower cover 300, the coupling structure described with reference to FIG. 6 above may be applied. That is, the plurality of sub-modules 100a and 100b may have a first protrusion 151 and a second protrusion 152 matching the insertion groove (300a in FIG. 6) of the lower cover 300 and the bent portion (400a in FIG. 6) of the upper cover 400, respectively.

When the plurality of sub-modules 100a and 100b are connected to each other by the connection member 200 and the combination of the lower cover 300 and the upper cover 400 is completed, the battery module 10 may be completed as illustrated in the lower right end of diagram in FIG. 12.

The assembly sequence illustrated in FIG. 12 is only an example, and the assembly sequence of the battery module 10 may be different from the illustrated example. For example, the plurality of sub-modules 100a and 100b may be simultaneously coupled to the connection member 200, the upper cover 400 and the lower cover 300. Alternatively, the plurality of sub-modules 100a and 100b may be fastened to the connection member in a state in which the connection member 200 is fastened to the lower cover 300 in advance, and an upper cover may cover upper portions of the plurality of submodules 100a and 100b.

The method of manufacturing the battery module 10 is not limited to the above example, and for example, the method may further include connecting sensing modules (125 in FIG. 3) for detecting the state of the submodules 100 to each other or connecting a connector to the terminal portion (122 in FIG. 3) of the sub-modules 100. Also, the method of manufacturing the battery module 10 may further include a cooling plate coupling step of coupling a cooling plate for cooling the sub-modules 100 to the lower cover 300. In this case, the cooling plate may be coupled to the lower cover 300 by welding, brazing, roll-bonding, thermal fusion, filler bonding, or friction welding.

The battery module 10 according to the example embodiments may include a plurality of sub-modules 100 each including a cell stack 110, and may implement a high capacity energy source. In this case, by changing the number of battery cells 1000 included in each sub-module 100, the battery module 10 having various capacities may be rapidly manufactured.

Also, since individual sub-modules 100 included in the battery module 10 may be connected to each other through the connection member 200, a simple and stable coupling structure may be obtained.

Also, since the connection member 200 included in the battery module 10 may guide the assembly position of each sub-module 100, the battery module 10 may be swiftly and accurately assembled.

Also, the battery module 10 may include an integrated lower cover 300 or an integrated upper cover 400 for supporting the plurality of sub-modules 100, such that structural stability of the battery module 10 may be improved.

Also, in at least one sub-module 100, one side connected to the connection member 200 may be closed with an insulating cover 130 without an end cover 140, thereby increasing energy density in the limited internal space of the battery module 10.

Also, since the side cover 150 and the end cover 140 of the sub-module 100 may form at least a portion of the outer surface of the battery module 10, a module housing structure having an internal space may not be provided.

Also, the battery cell 1000 included in the sub-module 100 may be disposed by bending a protruding portion protruding in a direction toward the lower cover 300, thereby increasing heat dissipation efficiency of the battery module 10.

According to the aforementioned example embodiment, the battery module may have a simplified structure having improved assembly.

Also, a high capacity battery module may be implemented by assembling a plurality of sub-modules.

Also, by configuring the number of battery cells included in the sub-module in various manners, the battery module suitable for a required power level may be swiftly and accurately provided.

While only example embodiments have been illustrated and described above, it will be apparent to those skilled in the art that modifications and variations could be made without departing from the scope of the present disclosure as defined by the appended claims.

## Claims

1. A battery module, comprising:
a plurality of cell assemblies including a first cell assembly and a second cell assembly each including a plurality of battery cells;
a connection member connected to the first cell assembly and the second cell assembly, respectively;
a lower cover supporting the plurality of cell assemblies; and
an end cover spaced apart from the connection member,
wherein the first cell assembly and the second cell assembly have at least one side facing the connection member and the other side facing the end cover.

2. The battery module of claim 1, wherein each of the first cell assembly and the second cell assembly includes a cell stack in which the plurality of battery cells are stacked in a first direction.

3. The battery module of claim 2, wherein the first cell assembly and the second cell assembly are disposed in a second direction perpendicular to the first direction with the connection member interposed therebetween.

4. The battery module of claim 2 or 3, wherein at least one of the first cell assembly and the second cell assembly includes:
a busbar assembly including a busbar electrically connected to the cell stack; and
one or more insulating covers coupled to the busbar assembly.

5. The battery module of claim 4, wherein the one or more insulating covers includes:
a first insulating cover disposed between the connection member and the busbar assembly; and
a second insulating cover disposed between the end cover and the busbar assembly.

6. The battery module of claim 4 or 5, further
comprising:
a side cover disposed to oppose at least one of the first cell assembly and the second cell assembly and coupled to the connection member, preferably wherein the side cover includes:
a first coupling portion coupled to the connection member; and
a second coupling portion coupled to the busbar assembly;
and/or wherein the busbar assembly further includes a busbar frame supporting the busbar, and
wherein the second coupling portion is coupled to the busbar frame.

7. The battery module of claim 6, further comprising:
a plurality of fastening members penetrating through the side cover and fastened to the connection member or the busbar assembly, preferably wherein fastening holes into which the fastening member is inserted are disposed on both ends of the connection member.

8. The battery module of claim 6 or 7, wherein the lower cover includes an insertion groove into which at least a portion of the side cover is inserted,
preferably wherein the insertion groove extends in a second direction perpendicular to the first direction, and
wherein the side cover includes a first protrusion sliding along the insertion groove.

9. The battery module of anyone of claims 6 to 8, further
comprising:
an upper cover covering upper portions of the plurality of cell assemblies,
wherein the upper cover includes a bent portion bent in a direction toward the lower cover and coupled to the side cover.

10. The battery module of claim 9, wherein the side cover further includes a second protrusion disposed between the bent portion and the cell stack;
and/or wherein the side cover is welded to at least one of the upper cover or the lower cover.

11. A battery module, comprising:
a plurality of sub-modules each including a cell stack in which a plurality of battery cells are stacked; and
a connection member disposed between two of the plurality of sub-modules, wherein at least one of the plurality of sub-modules includes a first surface on which an insulating cover formed of a non-conductive material is disposed; and
a second surface on which an end cover including a metal material is disposed, and the first surface is connected to the connection member to face the connection member.

12. The battery module of claim 11, wherein the plurality of battery cells are stacked in a first direction, and the plurality of sub-modules comprises a first sub-module and a second sub-module disposed in a second direction perpendicular to the first direction.

13. The battery module of claim 12, wherein at least one of the plurality of sub-modules comprises a side cover opposing the cell stack in the first direction, and the side cover is coupled to the end cover and the connection member.

14. The battery module of anyone of claims 11 to 13, further comprising an upper cover and a lower cover supporting the plurality of sub-modules.

15. The battery module of claim 14, wherein the upper cover and the lower cover may be welded to the side cover.
